# EUROPÄISCHE PATENTSCHRIFT

(11) **EP 0 905 459 B1**
(45) Veröffentlichungstag und Bekanntmachung des Hinweises auf die Patenterteilung: **09.06.2004**
(21) Anmeldenummer: 98114530.3
(22) Anmeldetag: 03.08.1998
(51) Int. Cl.: F25B 43/00, B60H 1/32

(54) **Akkumulator für eine nach dem "Orifice"-Prinzip arbeitende Klimaanlage, insbesondere Fahrzeugklimaanlage**
Accumulator for an air conditioner of the orifice type, particularly for vehicle air conditioners
Accumulateur pour système de climatisation de type à orifice, en particulier pour des systèmes de climatisation de véhicule

(30) Priorität: 25.09.1997 DE 19742230
(43) Veröffentlichungstag der Anmeldung: 31.03.1999
(73) Patentinhaber: HANSA METALLWERKE AG, 70567 Stuttgart (DE)
(72) Erfinder: Hackspacher, Franz, 70794 Filderstadt (DE); Schmid, Jürgen, 70794 Filderstadt (DE)
(74) Vertreter: Ostertag, Ulrich, Dr.

(56) Entgegenhaltungen:
- EP-A- 0 238 742
- DE-A- 19 505 108
- GB-A- 1 435 473
- US-A- 2 278 003
- US-A- 4 199 960
- US-A- 4 208 887
- US-A- 4 474 034
- US-A- 5 076 071

## Beschreibung

Die Erfindung betrifft einen Akkumulator für eine nach dem "Orifice"-Prinzip arbeitende Klimaanlage, gemäß dem Oberbegriff des Anspruchs 1. Ein solcher Akkumularor ist z.B aus der US-A-4 199 960 bekannt.

Bei nach dem "Orifice"-Prinzip arbeitenden Klimaanlagen ist der Trockner/Akkumulator dem Verdampfer nachgeordnet. Das aus dem Verdampfer kommende gasförmige Kältemittel besteht aus einer Gas- und einer Flüssigphase. Insbesondere die flüssige Phase enthält Feuchtigkeit und mit dem Kältemittel mittransportiertes Öl. Aufgabe des Trockners/Akkumulators ist es u. a., dem Kältemittel die Feuchtigkeit (Wasser) zu entziehen, das Öl jedoch wieder in den Kältemittelkreislauf zurückzuführen ist und außerdem die flüssige von der gasförmigen Phase zu trennen.

Bei einem aus der DE 195 05 108 A1 bekannten Akkumulator wird die Leitung, welche den gasförmig gebliebenen Anteil des Kältemittels durch das Gehäuse hindurchführt, von zwei konzentrisch verlaufenden Rohren gebildet. Das äußere Standrohr ist mit seinem oberen freien Ende mit dem Innenraum des Gehäuses und somit mit dem Einlaß verbunden. Das innere Tauchrohr ist an den Auslaß angeschlossen. Beim Vorbeiströmen des gasförmigen Kältemittels an der Bohrung im Boden des Standrohres entsteht eine Saugwirkung, durch welche sich im Bodenbereich des Gehäuses sammelndes Öl mitgerissen und im Kältemittel als aus kleinen Tropfen bestehender Ölnebel weitertransportiert wird.

Ein derartiger Akkumulator mit zwei zueinander koaxialen Rohren ist sehr preiswert herzustellen und gestattet in vielen Fällen einen zufriedenstellenden Weitertransport des sich am Boden des Gehäuses sammelnden Öles. In manchen Anwendungsfällen reicht die durch das vorbeiströmende Kältemittel bewirkte Saugwirkung jedoch nicht aus, um das Öl in der gewünschten Weise mitzureißen und als Nebel weiterzutransportieren..

Die vorliegende Erfindung hat daher die Aufgabe, einen Akkumulator der eingangs genannten Art so weiterzubilden, daß auch unter ungünstigen Anwendungsbedingungen bzw. Betriebszuständen das Öl aus dem Akkumulator abtransportiert wird. erfindungsgemäß durch die Merkmale des Kennzeichens des Anspruchs 1 gelöst.

Bei dem erfindungsgemäßen Akkumulator arbeitet, im Gegensatz zum Stand der Technik, das innere Tauchrohr somit als Einlaßrohr, wohingegen das äußere Standrohr als Auslaßrohr arbeitet. Dies ist jedoch nur dadurch möglich, daß die beiden Rohre bereichsweise nicht koaxial zueinander verlaufen und statt dessen das innere Tauchrohr die Wand des Standrohres an einer Stelle durchdringt. Auf diese !Weise kann einerseits das Tauchrohr mit dem Innenraum des Gehäuses bzw. dem Einlaß für das Kältemittel und andererseits das Standrohr mit dem Auslaß kommunizieren. Diese Maßnahme bewirkt, daß das Öl, welches vom Ölsumpf am Boden des Gehäuses über die kleine Öffnung in den Bereich über dem Boden des Standrohres gelangt, nicht nur als Ölnebel mitgerissen, sondern durch das gasförmige Kältemittel als Ölfilm entlang der inneren Wand des Standrohres zum Auslaß des Akkumulators getrieben wird. Durch die Erfindung wird somit ein Akkumulator geschaffen, welcher sehr preiswert insbesondere auch aus Kunststoff herzustellen ist und in dem das sich sammelnde Öl zuverlässig zum Auslaß weitertransportiert wird.

Die Ausbildung des Ölfilmes auf der Innenwand des Standrohres und somit die Fähigkeit, das Öl zu transportieren, wird dadurch erreicht, dass die kleine Bohrung im Übergangsbereich von Wand und Boden des Standrohres, vorzugsweise im Boden des Standrohres zu dessen Wand benachbart angeordnet ist.

Die Wand des Standrohres geht strömungstechnisch glatt in den Boden des Standrohres über und die Mitte des Bodens des Standrohres ist zum Tauchrohr hin hochgezogen. Hierdurch wird die Strömung des Kältemittels bei der Richtungsumkehr vom Tauchrohr zum Standrohr so geführt, daß die Strömungsverluste gering sind und der Mitnahmeeffekt des Öles verbessert wird.

Dabei können Einlaß und Auslaß an beinahe beliebigen Stellen am Gehäuse angeordnet werden. So ist z. B. nach Anspruch 2 der Einlaß und/oder der Auslaß an der Oberseite des Gehäuses angeordnet, wobei seine Längsachse in etwa parallel zur Längsachse des Akkumulators liegt. Nach Anspruch 3 ist der Einlaß und/oder der Auslaß in der Seitenwand des Gehäuses angeordnet, wobei seine Längsachse in etwa orthogonal zur Längsachse des Akkumulators liegt. Der erfindungsgemäße Akkumulator ist somit bezüglich unterschiedlichen Einbausituationen äußerst variabel.

Diese Variabilität des Akkumulators wird durch die erfindungsgemäße Weiterbildung nach Anspruch 4 nochmals erhöht, wonach der obere Bereich des Standrohres zum Auslaß hin gekrümmt ist und/oder der obere Bereich des Tauchrohres zum Innenraum des Gehäuses hin gekrümmt ist.

Die Herstell- und Einbaukosten des erfindungsgemäßen Akkumulators werden dadurch reduziert, daß Teile der Rohre in der Art von Adapterstücken ausgebildet sind. Dieser Gedanke ist in Anspruch 5 offenbart, wonach der obere Bereich des Standrohres und/oder der obere Bereich des Tauchrohres als separates Teil ausgebildet sind/ist.

Die Ansprüche 6 und 7 betreffen die Halterung des Tauchrohres. Wenn das Tauchrohr bis zur Oberseite des Gehäuses reicht, kann es gemäß Anspruch 6 dadurch gehaltert werden, daß am oberen Ende des Tauchrohres mindestens zwei axiale Vorsprünge angeformt sind, welche sich am Gehäuse abstützen. Die Lage des Tauchrohres zum Boden des Standrohres wird dadurch definiert, daß, gemäß Anspruch 7, am unteren Ende des Tauchrohres mindestens zwei axiale Vorsprünge angeformt sind, welche sich am Boden des Standrohres abstützen.

Fertigung und Wartung des erfindungsgemäßen Akkumulators werden durch die Weiterbildung nach Anspruchr 8 erleichtert, wonach der Boden des Gehäuses abnehmbar ist.

Eine besonders bevorzugte Weiterbildung des erfindungsgemäßen Akkumulators ist in Ansprüche 9 angegeben: Danach stützt sich das Standrohr über eine Feder am Boden des Gehäuses ab, so daß das untere Ende des Standrohres einen Abstand vom Boden des Gehäuses einhält. Hierdurch ist das Standrohr unabhängig von möglicherweise auftretenden Fertigungstoleranzen und Vibrationen gegen den Boden des Gehäuses vorgespannt. Dabei ist sichergestellt, daß das Standrohr vom Boden des Gehäuses beabstandet ist. Das sich im Ringraum um das Standrohr absetzende Öl kann somit auch in den Raum unterhalb des Standrohres und von dort über die kleine Öffnung zur Oberseite des Bodens des Standrohres fließen.

Nachfolgend wird die Erfindung anhand der Zeichnung näher erläutert; in dieser zeigen:
- Figur 1:: eine Schnittansicht eines ersten Ausführungsbeispieles eines Akkumulators; und
- Figur 2:: eine Schnittansicht eines zweiten Ausführungsbeispieles eines Akkumulators.

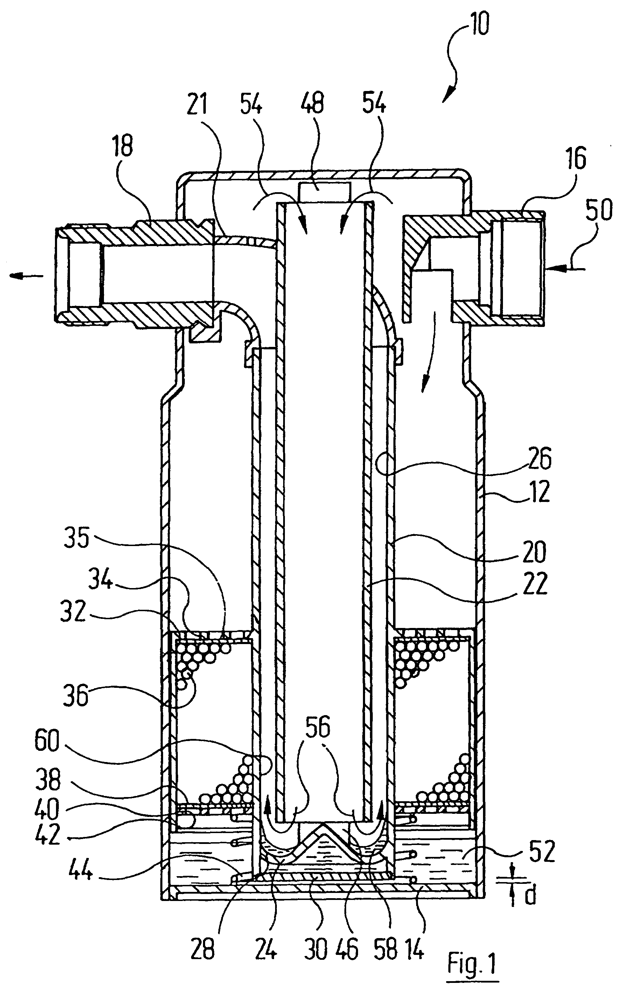

In Figur 1 ist ein Akkumulator insgesamt mit dem Bezugszeichen 10 versehen. Er umfaßt ein becherförmiges Gehäuse 12, das nach unten durch einen Boden 14 abgeschlossen ist. Der Boden 14 kann lösbar und abgedichtet oder permanent an dem Gehäuse 12 befestigt, beispielsweise verschweißt sein.

Im oberen Bereich der Umfangswand des Gehäuses 12 befindet sich ein radial eingefügter Anschlußnippel 16 (in Figur 1 auf der rechten Seite des Gehäuses 12), an welchem ein Kältemittelrohr (nicht dargestellt) befestigt werden kann und welcher der Zufuhr des Kältemittels in den Innenraum des Gehäuses 12 dient.

Ein zweiter Anschlußnippel 18 zur Befestigung eines Kältemittelrohres, welches dem Auslaß des Kältemittelgases dient, ist dem Anschlußnippel 16 diametral gegenüberliegend ebenfalls im oberen Bereich der Umfangswand angeordnet.

Innerhalb des Gehäuses 12 und im unteren Bereich koaxial zu diesem ist ein Standrohr 20 eingebracht. Dessen oberer Bereich ist als separates gekrümmtes Teil 21 ausgebildet und mit dem Anschlußnippel 18 verbunden. In das Standrohr 20 ist ein Tauchrohr 22 eingeführt und zum unteren Bereich des Standrohres 20 koaxial angeordnet. Es durchdringt das gekrümmte Teil 21 und ist hierdurch in der Lage, mit seinem freien oberen Ende mit dem Innenraum des Gehäuses 12 zu kommunizieren.

Das Standrohr 20 weist im Bereich seines unteren Endes einen Boden 24 auf, welcher an die Wand 26 des Standrohres 20 strömungstechnisch glatt angeformt ist und dessen Mitte in in Figur 1 vertikaler Richtung nach oben hin hochgezogen ist. Im Boden 24 ist zur Wand 26 benachbart eine kleine Bohrung 28 angeordnet. Die Wand 26 des Standrohres 20 reicht nach unten über seinen Boden 24 hinaus bis in die Nähe des Bodens 14 des Gehäuses 12. Die untere Öffnung des Standrohres 20 ist durch ein Sieb 30 bedeckt.

An die äußere Wandfläche des Standrohres 20 ist ein ringförmiger, nach unten offener Behälter 32 angeformt, in dessen oberer Begrenzungswand eine Mehrzahl von Perforationen 34 eingebracht ist. An der oberen Begrenzungswand liegt innen eine Filzschicht 35 an. Die radial außenliegende Wand des Behälters 32 liegt an der Innenwand des Gehäuses 12 an, wodurch das Standrohr 20 radial gehaltert ist. Der Behälter 32 ist mit Trockenmittel 36 gefüllt und nach unten hin durch eine Filzschicht 38 und eine mit Perforationen 42 versehene Ringscheibe 40 verschlossen. Zwischen Ringscheibe 40 und Boden 14 des Gehäuses 12 ist eine Schraubenfeder 44 gespannt, so daß sich das Standrohr 20 am Boden 14 des Gehäuses 12 abstützt und auf diese Weise einen Abstand d vom Boden 14 des Gehäuses 12 einhält.

Nach oben hin liegt das Standrohr 20 an zwei axialen Vorsprüngen 46 an, welche an den unteren Umfangsrand des Tauchrohres 22 angeformt sind. An dessen oberen Umfangsrand sind ebenfalls zwei sich axial nach oben erstreckende Vorsprünge 48 angeformt, welche sich gegen die obere Begrenzungswand des Gehäuses 12 abstützen. Somit ist das Tauchrohr zwischen Gehäuse 12 und Standrohr 20 sicher verklemmt.

Der oben beschriebene Akkumulator 10 arbeitet wie folgt:

Vom Verdampfer kommendes Kältemittel wird dem Innenraum des Gehäuses 12 des Akkumulators 10 über den Anschlußnippel 16 zugeführt (Pfeil 50). Die flüssige Phase des Kältemittels gelangt in den unteren Bereich des Gehäuses 12, wo es insbesondere über die Perforationen 34 und durch die Filzschicht 35 hindurch in die Trockenmittelfüllung 36 eintritt. Durch die Trockenmittelfüllung 36 wird dem Kältemittel Wasser entzogen.

Das in dem Kältemittel außerdem enthaltene Öl sinkt aufgrund seines größeren spezifischen Gewichtes nach unten weiter ab und tritt durch die Filzschicht 38 und die Perforation 42 der Ringscheibe 40 in den Zwischenraum zwischen dem Boden 14 des Gehäuses 12 und der Unterseite des Behälters 32 ein, wo es einen Ölsumpf 52 bildet.

Der gasförmig verbliebene Teil des über den Anschlußnippel 16 zuströmenden Kältemittels tritt von oben her in das Tauchrohr 22 ein (Pfeile 54) und strömt von dort zu dessen unterem Ende. Dort wird es am Boden 24 des Standrohres 20 umgelenkt (Pfeile 56) und strömt in dem Ringraum zwischen Tauchrohr 22 und Standrohr 20 nach oben.

Aufgrund des Abstandes d zwischen Unterseite des Standrohres 20 und Boden 14 des Gehäuses 12 gelangt das Öl aus dem Ölsumpf 52 auch in den Bereich unterhalb des Standrohres 20. Von dort strömt es aufgrund des Prinzips der "kommunizierenden Röhren" durch das Sieb 30 und die kleine Bohrung 28 hindurch in das Standrohr 20 und bildet dort auf dem Grund des Bodens 24 einen Ölspiegel 58. Dieser wird von dem entsprechend den Pfeilen 56 strömenden Kältemittel als Ölfilm 60 auf der Innenseite der Wand 26 des Standrohres 20 nach oben getrieben, wodurch der Abtransport des Öles 52 deutlich verbessert wird. Über das gekrümmte Teil 21 gelangt das gasförmige Kältemittel und der Ölfilm 60 zum Anschlußnippel 18 und von dort in das Kältemittelrohr (nicht dargestellt).

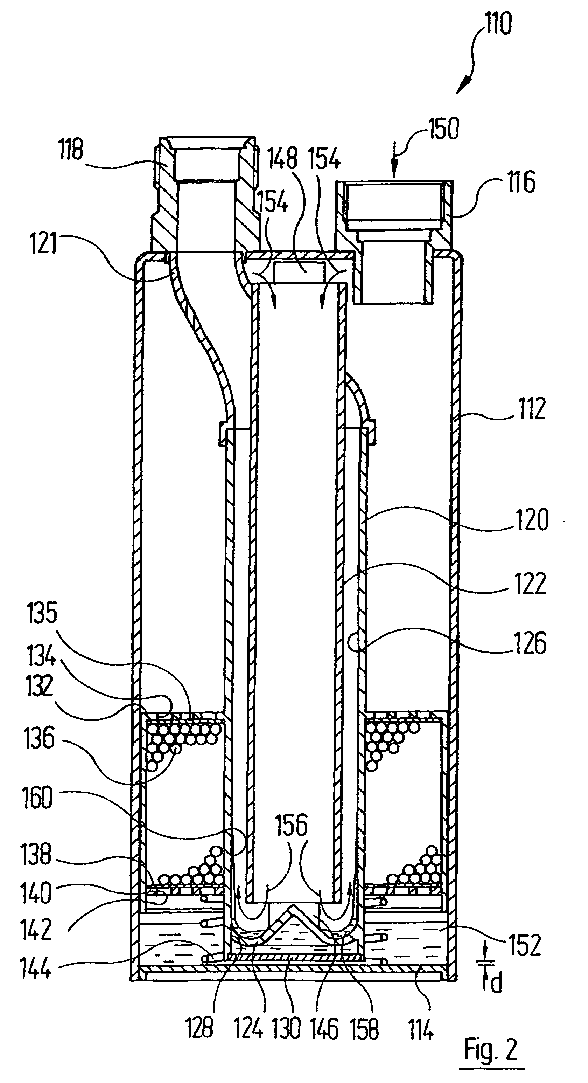

In Figur 2 ist ein zweites Ausführungsbeispiel eines Akkumulators insgesamt mit dem Bezugszeichen 110 versehen. Gleiche Teile sind in Figur 2 nicht nochmals in Detail erläutert und mit den gleichen Bezugszeichen wie in Figur 1 zuzüglich 100 versehen.

Der in Figur 2 dargestellte Akkumulator 110 unterscheidet sich von dem in Figur 1 dargestellten durch die Anordnung des einlaßseitigen Anschlußnippels 116 und des auslaßseitigen Anschlußnippels 118. Diese befinden sich nun beide in der oberen Begrenzungswand des Gehäuses 112. Dabei ist der obere Bereich des Standrohres 120 wiederum als separates gekrümmtes Teil 121 ausgebildet, dessen Form jedoch der Position des auslaßseitigen Anschlußnippels 118 angepaßt ist und welches ebenfalls vom Tauchrohr 122 durchdrungen wird.

Hierdurch wird deutlich, daß der Akkumulator 10, 110 auch für unterschiedliche Einbausituationen problemlos verwendet werden kann.

## Patentansprüche

1. Akkumulator (10; 110) für eine nach dem "Orifice"-Prinzip arbeitende Klimaanlage, insbesondere Fahrzeugklimaanlage, mit
a) einem Gehäuse (12; 112) das einen Einlass (16; 116) und einen Aulass (18; 118) für ein Kältemittel aufweist;
b) einem im unteren Bereich des Innenraumes des Gehäuses untergebrachten, ein Trockenmittel enthaltenden Einsatz (32; 132);
c) einem äußeren Standrohr (20; 120) mit einem Boden (24; 124) der in kurzem Abstand (d) über dem Boden des Gehäuses angeordnet ist, so dass der Boden des äußeren Standrohres in einen sich ausbildenden Ölsumpf hineinragt, wobei das Standrohr nahe dem Boden (14; 114) des Gehäuses eine mit dem Innenraum des Gehäuses kommunizierende kleine Bohrung (28; 128) aufweist;
d) einem inneren Tauchrohr (22; 122), welches sich innerhalb des Standrohres bis in die Nähe von dessen Boden erstreckt,
wobei
e) Standrohr und Tauchrohr zumindest in ihren unteren Bereichen zueinander koaxial angeordnet sind;
f) das obere Ende (21; 121) des Standrohres (20; 120) mit dem Auslass (18; 118) verbunden ist; und
g) der obere Bereich des Tauchrohres (22; 122) die Wand des Standrohres (20; 120) durchdringt und mit dem Innenraum des Gehäuses (12; 112) kommuniziert;
**dadurch gekennzeichnet, dass**
h) die kleine Bohrung (28; 128) im Übergangsbereich von Wand (26; 126) und Boden (24; 124) des Standrohres (20; 120), insbesondere im Boden (24; 124) des Standrohres (20; 120) zu dessen Wand (26; 126) benachbart angeordnet ist und
i) die Wand (26; 126) des Standrohres (20; 120) strömungstechnisch glatt in den Boden (24; 124) des Standrohres (20; 120) übergeht und die Mitte des Bodens (24; 124) des Standrohres (20; 120) zum Tauchrohr (22; 122) hin hochgezogen ist.

2. Akkumulator nach Anspruch 1, **dadurch gekennzeichnet,**
**daß** der Einlaß (16) und/oder der Auslaß (18) in der Seitenwand des Gehäuses (12) angeordnet ist und seine Längsachse in etwa orthogonal zur Längsachse des Akkumulators (10) liegt.

3. Akkumulator nach Anspruch 1, **dadurch gekennzeichnet,**
**daß** der Einlaß (116) und/oder der Auslaß (118) in der Oberseite des Gehäuses (112) angeordnet ist und seine Längsachse in etwa parallel zur Längsachse des Akkumulators (110) liegt.

4. Akkumulator nach einem der vorhergehenden Ansprüche,
**dadurch gekennzeichnet, daß** der obere Bereich (21; 121) des Standrohres (20; 120) zum Auslaß (18; 118) hin gekrümmt ist und/oder der obere Bereich des Tauchrohres zum Innenraum des Gehäuses (12; 112) hin gekrümmt ist.

5. Akkumulator nach einem der vorhergehenden Ansprüche,
**dadurch gekennzeichnet, daß** der obere Bereich des Standrohres (20; 120) und/oder der obere Bereich des Tauchrohres als separates Teil (21; 121) ausgebildet sind/ist.

6. Akkumulator nach einem der vorhergehenden Ansprüche,
**dadurch gekennzeichnet, daß** am oberen Ende des Tauchrohres (22; 122) mindestens zwei axiale Vorsprünge (48; 148) angeformt sind, welche sich am Gehäuse (12; 112) abstützen.

7. Akkumulator nach einem der vorhergehenden Ansprüche,
**dadurch gekennzeichnet, daß** am unteren Ende des Tauchrohres (22; 122) mindestens zwei Vorsprünge (46; 146) angeformt sind, welche sich am Boden (24; 124) des Standrohres (20; 120) abstützen.

8. Akkumulator nach einem der vorhergehenden Ansprüche,
**dadurch gekennzeichnet, daß** der Boden (14; 114) des Gehäuses (12; 112) abnehmbar ist.

9. Akkumulator nach einem der vorhergehenden Ansprüche,
**dadurch gekennzeichnet, daß** das Standrohr (20; 120) sich über eine Feder (44; 144) am Boden (14; 114) des Gehäuses (12; 112) abstützt und das untere Ende des Standrohres (20; 120) auf diese Weise einen Abstand (d) vom Boden (14; 114) des Gehäuses (12; 112) einhält.

## Claims

1. Accumulator (10; 110) for an air conditioner, in particular vehicle air conditioner, working on the orifice principle, having
a) a housing (12; 112) with an inlet (16; 116) and an outlet (18; 118) for a refrigerant;
b) an insert (32; 132) accommodated in the lower region of the interior of the housing and containing a drying agent;
c) an outer standpipe (20; 120) with a bottom (24; 124) which is arranged at a short distance (d) above the bottom of the housing, so that the bottom of the outer standpipe projects into an oil sump being formed, the standpipe having close to the bottom (14; 114) of the housing a small bore (28; 128) communicating with the interior of the housing;
d) an inner immersion pipe (22; 122) which extends inside the standpipe to a point in the vicinity of the bottom of the latter,
e) the standpipe and the immersion pipe being arranged coaxially with each other at least in their lower regions;
f) the upper end (21; 121) of the standpipe (20; 120) being connected to the outlet (18; 118), and
g) the upper region of the immersion pipe (22; 122) penetrating through the wall of the standpipe (20; 120) and communicating with the interior of the housing (12; 112);
**characterised in that**
h) the small bore (28; 128) is arranged in the transition region of the wall (26; 126) and the bottom (24; 124) of the standpipe (20; 120), in particular in the bottom (24; 124) of the standpipe (20; 120), adjacent to the wall (26; 126) of the latter, and
i) the wall (26; 126) of the standpipe (20; 120) merges in a fluidically smooth manner into the bottom (24; 124) of the standpipe (20; 120), and the centre of the bottom (24; 124) of the standpipe (20; 120) is raised up towards the immersion pipe (22; 122).

2. Accumulator according to Claim 1, **characterised in that** the inlet (16) and/or the outlet (18) is arranged in the side wall of the housing (12), and its longitudinal axis is approximately orthogonal to the longitudinal axis of the accumulator (10).

3. Accumulator according to Claim 1, **characterised in that** the inlet (116) and/or the outlet (118) is arranged in the upper side of the housing (112), and its longitudinal axis is approximately parallel to the longitudinal axis of the accumulator (110).

4. Accumulator according to one of the preceding claims, **characterised in that** the upper region (21; 121) of the standpipe (20; 120) is curved towards the outlet (18; 118) and/or the upper region of the immersion pipe is curved towards the interior of the housing (12; 112).

5. Accumulator according to one of the preceding claims, **characterised in that** the upper region of the standpipe (20; 120) and/or the upper region of the immersion pipe are/is designed as a separate part (21; 121).

6. Accumulator according to one of the preceding claims, **characterised in that** at least two axial projections (48; 148) are integrally formed on the upper end of the immersion pipe (22; 122) and are supported on the housing (12; 112).

7. Accumulator according to one of the preceding claims, **characterised in that** at least two projections (46; 146) are integrally formed on the lower end of the immersion pipe (22; 122) and supported on the bottom (24; 124) of the standpipe (20; 120).

8. Accumulator according to one of the preceding claims, **characterised in that** the bottom (14; 114) of the housing (12; 112) is detachable.

9. Accumulator according to one of the preceding claims, **characterised in that** the standpipe (20; 120) is supported on the bottom (14; 114) of the housing (12; 112) via a spring (44; 144), and the lower end of the standpipe (20; 120) is thus kept at a distance (d) from the bottom (14; 114) of the housing (12; 112).

## Revendications

1. Accumulateur (10 ; 110) pour système de climatisation de type "à orifice", notamment un système de climatisation de véhicules, comprenant
a) un boîtier (12; 112) comportant une admission (16; 116) et une sortie (18; 118) d'agent cryogénique;
b) une pièce intégrée (32 ; 132) renfermant un agent de dessiccation et logée dans la région inférieure de l'espace interne du boîtier ;
c) un tube vertical extérieur (20 ; 120) muni d'un fond (24 ; 124) situé à une courte distance (d) au-dessus du fond du boîtier, de sorte que le fond dudit tube vertical extérieur pénètre dans une poche d'huile se formant, ledit tube vertical étant doté, à proximité du fond (14 ; 114) dudit boîtier, d'un petit perçage (28 ; 128) communiquant avec l'espace interne dudit boîtier;
d) un tube plongeant intérieur (22 ; 122) s'étendant à l'intérieur du tube vertical, jusqu'à proximité du fond de celui-ci,
accumulateur dans lequel
e) le tube vertical et le tube plongeant sont disposés coaxialement l'un à l'autre, au moins dans leurs régions inférieures;
f) l'extrémité supérieure (21 ; 121) du tube vertical (20 ; 120) est raccordée à la sortie (18 ; 118); et
g) la région supérieure du tube plongeant (22 ; 122) traverse la paroi du tube vertical (20 ; 120) et communique avec l'espace interne du boîtier (12 ; 112);
**caractérisé par le fait que**
h) le petit perçage (28 ; 128) est situé dans la zone de transition entre la paroi (26 ; 126) et le fond (24 ; 124) du tube vertical (20 ; 120), notamment dans ledit fond (24 ; 124) dudit tube vertical (20 ; 120), au voisinage de la paroi (26 ; 126) de celui-ci, et
i) la paroi (26 ; 126) du tube vertical (20 ; 120) fusionne, dans le fond (24 ; 124) dudit tube vertical (20 ; 120), d'une manière lisse techniquement propice à l'écoulement, et le centre dudit fond (24 ; 124) dudit tube vertical (20 ; 120) est rehaussé en direction du tube plongeant (22 ; 122).

2. Accumulateur selon la revendication 1, **caractérisé par le fait que** l'admission (16) et/ou la sortie (18) est disposée dans la paroi latérale du boîtier (12), et son axe longitudinal est à peu près perpendiculaire à l'axe longitudinal de l'accumulateur (10).

3. Accumulateur selon la revendication 1, **caractérisé par le fait que** l'admission (116) et/ou la sortie (118) est disposée dans la face supérieure du boîtier (112), et son axe longitudinal est à peu près parallèle à l'axe longitudinal de l'accumulateur (110).

4. Accumulateur selon l'une des revendications précédentes, **caractérisé par le fait que** la région supérieure (21 ; 121) du tube vertical (20 ; 120) est coudée en direction de la sortie (18 ; 118) ; et/ou la région supérieure du tube plongeant est coudée en direction de l'espace interne du boîtier (12 ; 112).

5. Accumulateur selon l'une des revendications précédentes, **caractérisé par le fait que** la région supérieure du tube vertical (20; 120), et/ou la région supérieure du tube plongeant, est/sont réalisée(s) sous la forme d'une pièce distincte (21 ; 121).

6. Accumulateur selon l'une des revendications précédentes, **caractérisé par le fait qu'**au moins deux protubérances axiales (48 ; 148), faisant corps avec l'extrémité supérieure du tube plongeant (22 ; 122), prennent appui contre le boîtier (12 ; 112).

7. Accumulateur selon l'une des revendications précédentes, **caractérisé par le fait qu'**au moins deux protubérances (46 ; 146), faisant corps avec l'extrémité inférieure du tube plongeant (22 ; 122), prennent appui contre le fond (24 ; 124) du tube vertical (20; 120).

8. Accumulateur selon l'une des revendications précédentes, **caractérisé par le fait que** le fond (14 ; 114) du boîtier (12 ; 112) est amovible.

9. Accumulateur selon l'une des revendications précédentes, **caractérisé par le fait que** le tube vertical (20 ; 120) prend appui contre le fond (14 ; 114) du boîtier (12 ; 112) par l'intermédiaire d'un ressort (44 ; 144), et l'extrémité inférieure dudit tube vertical (20 ; 120) maintient, de la sorte, une distance (d) vis-à-vis dudit fond (14 ; 114) dudit boîtier (12 ; 112).
